# EUROPEAN PATENT SPECIFICATION

(11) **EP 1 626 562 B1**
(45) Date of publication and mention of the grant of the patent: **06.10.2010**
(21) Application number: 05017310.3
(22) Date of filing: 09.08.2005
(51) Int. Cl.: H04M 7/00, H04M 3/56

(54) **IP telephone system, IP telephone apparatus and method for performing telephone conference**
IP-basiertes Telefonsystem, IP-basiertes Telefon und Verfahren zur Durchführung einer Telefonkonferenz
Système de téléphonie IP, téléphone IP et procédé de mise en oeuvre d'une conférence téléphonique

(30) Priority: 09.08.2004 JP 2004232740
(43) Date of publication of application: 15.02.2006
(73) Proprietor: Panasonic Corporation, Kadoma-shi Osaka 571-8501 (JP)
(72) Inventor: Kobayashi, Kazuto, Kawasaki-shi Kanagawa, 213-0011 (JP); Miyajima, Akira, Yokohama-shi Kanagawa 222-0023 (JP)
(74) Representative: Grünecker, Kinkeldey, Stockmair & Schwanhäusser Anwaltssozietät

(56) References cited:
- KEITH MOORE UNIVERSITY OF TENNESSEE: "The Resource Catalog draft-moore-rescap-rc-03.txt" IETF STANDARD-WORKING-DRAFT, INTERNET ENGINEERING TASK FORCE, IETF, CH, no. 3, 28 February 2002 (2002-02-28), XP015004447 ISSN: 0000-0004
- MEALLING M: "The Naming Authority Pointer (NAPTR) DNS Resource Record" IETF STANDARD-WORKING-DRAFT, INTERNET ENGINEERING TASK FORCE, IETF, CH, September 2000 (2000-09), XP002237947
- PETERSON H LIU J YU NEUSTAR B CAMPBELL DYNAMICSOFT J: "Using ENUM for SIP Applications" IETF STANDARD-WORKING-DRAFT, INTERNET ENGINEERING TASK FORCE, IETF, CH, vol. sipping, no. 1, 8 February 2002 (2002-02-08), XP015027896 ISSN: 0000-0004

## Description

### BACKGROUND OF THE INVENTION

### 1. Field of the Invention

The present invention relates to an IP telephone system, an IP telephone apparatus and a method for performing a telephone conference that enable voice communication via an IP network.

### 2. Description of Related Art

The recent rapid growth of the Internet has drawn attention to an IP telephone system that enables low-cost voice communications with telephone apparatuses at remote places as well as free voice communications between IP telephone apparatuses owned by subscribers. There has been a request for conducting, for example, a company conference using such an IP telephone system. Such a conference usually involves a plurality of participants.

Recently, ENUM technology has drawn attention due to its ability to effectively manage information used for various communications methods including telephones, facsimiles, cellular phones, and e-mails and to enable various communication according to individual circumstances. ENUM is designed to identify the Internet service with a unique global identification number such as the E.164 number, using the DNS (Domain Name System). Currently, the IETF (Internet Engineering Task force) is seeking to standardize ENUM platforms, where protocol specifications are discussed (See Publication 1, for example).
[Publication 1] Issued by ENUM Trial Japan "ENUM Trial Japan First Report" May, 2004

However, the above-described system is problematic in that when the user has, for example, a company conference using the IP telephone system, it is necessary to individually provide conference participants with information such as telephone numbers of other participants. This has been a problem in terms of extra labor required to prepare for a conference.

Particularly, when a number of participants are scheduled to attend a conference, a great amount of labor is required to prepare for a conference.

Document KEITH MOORE UNIVERSITY OF TENNESSEE: "The Resource Catalog draft-moore-rescap-rc-03.txt" IETF STANDARD-WORKING-DRAFT, INTERNET ENGINEERING TASK FORCE, IETF, CH, no. 3, 28 February 2002 (2002-02-28), describes version 3 of a Resource Catalogue, which is a service for storing and obtaining metadata that describes network-accessible recourses. This service is primarily intended for use by clients prior to accessing, or attempting to access, a particular resource. The Resource Catalogue service may thus be use (for example) to inform a client as to which of a variety of features are supported by the resource, or which methods may be used to access the resource, or which of a small set of locations may be used to access the resource.

Document MEALLING M: "The Naming Authority Pointer (NAPTR) DNS Resource Record" IETF STANDARD-WORKING-DRAFT, INTERNET ENGINEERING TASK FORCE, IETF, CH, September 2000 (2000-09) describes a Domain Name System (DNS) resource record that aims at producing a new domain label or Uniform Resource Identifier (URI). The resulting main label or URI may be used for querying NAPTR resource records.

Document PETERSON H LIU J YU NEUSTAR B CAMPBELL DYNAMICSOFT J: "Using ENUM for SIP Applications" IETF STANDARD-WORKING-DRAFT, INTERNET ENGINEERING TASK FORCE, IETF, CH, vol. sipping, no. 1, 8 February 2002 (2002-02-08), relates to the use of ENUM for SIP applications and attempt to sharpen the distinction between location services provided by the two protocols. Further, it aims at illustrating how the two protocols might work in concert and at clarifying the authoring and processing of ENUM records for SIP applications.

### SUMMARY OF THE INVENTION

The present invention is provided to address the above-described problems. The purpose of the present invention is to provide an IP telephone system, an IP telephone apparatus and a method for performing a telephone conference that reduce labor required to prepare for a conference and ensure smooth conference operation.

This object is solved by the present invention as claimed in the independent claims. Advantageous and preferred embodiments of the present invention are defined by the dependent claims.

The present invention relates to an IP telephone system that includes a plurality of IP telephone apparatuses and an ENUM server These IP telephone apparatuses are connected to an IP network and perform a mixing process on communication data output from other IP telephones apparatuses. The ENUM server stores a NAPTR resource record specifying a number which identifies a telephone conference being conducted among these IP telephone apparatuses and specifying identification information for an IP telephone apparatus that attends the telephone conference, and transmits a corresponding NAPTR resource record in response to a query from the IP telephone apparatus. In the IP telephone system, the IP telephone apparatus that attends the telephone conference transmits, to the ENUM server, a query for a NAPTR resource record by specifying the number which identifies the telephone conference. The IP telephone apparatus places a call based on identification information for another IP telephone apparatus that attends the telephone conference, the identification information being obtained from the received NAPTR resource record. The IP telephone apparatus then performs a mixing process on communication data that are output from other IP telephone apparatuses.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a network configuration to which an IP telephone system according to an embodiment of the present invention is applied;
Fig. 2 illustrates an example of a NAPTR record corresponding to a conference number stored in a DB of an ENUM server in the IP telephone system according to the embodiment;
Fig. 3 illustrates a block diagram describing a main function of IP telephone A in the IP telephone system according to the embodiment;
Fig. 4 illustrates a sequence diagram describing a case where a telephone conference is conducted via an IP network in the IP telephone system according to the embodiment;
Fig. 5 illustrates a flow chart describing an operation of IP telephone A in the Fig. 4 sequence;
Fig. 6 illustrates a flow chart describing an operation of IP telephone B in the Fig. 4 sequence; and
Fig. 7 illustrates a flow chart describing an operation of IP telephone C in the Fig. 4 sequence.

### DETAILED DESCRIPTION OF PREFERRED EMBODIMENTS

The embodiments of the present invention are explained in the following, in reference to the above-described drawings.

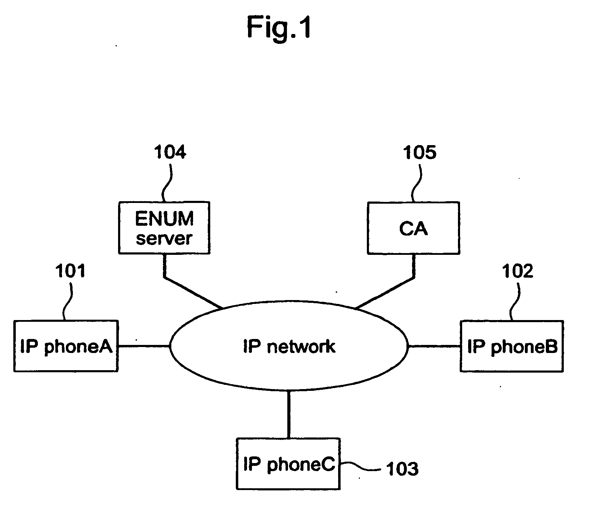

Fig. 1 illustrates a network configuration to which an IP telephone system according to an embodiment of the present invention is applied.

The IP telephone system according to the present embodiment includes a plurality of IP telephone apparatuses (hereafter referred to as "IP phone") A101 - C103 connected to an IP network, ENUM server 104, and CA (Call Agent) 105. In the figure, the three IP phones A101 - C103 are connected to the IP network. The configuration, however, is not limited to this example and may connect four or more IP phones to the IP network.

IP phones A101 - C103 have a function enabling voice communication with another IP telephone apparatus via the IP network. IP phones A101 - C103 also have a function which accesses ENUM server 104 and stores, to ENUM server 104, a NAPTR resource record (hereafter referred to as "NAPTR record)", which is described later. More specifically, they have a function which stores a NAPTR record corresponding to a conference number (described later). It is also possible to provide only a specified IP telephone apparatus with the conference number storage function.

Further, IP phones A101 - C103 have a function which performs a mixing process on voice data transmitted from other IP telephone apparatuses when voice communication is performed via the IP network. For example, IP phone A 101 mixes voice data output from IP phones B102 and C103, and adjusts the sound volume and quality when a three-party call is performed among IP phones A101, B102 and C103. The mixing process performed at the IP telephone apparatus is described later.

ENUM server 104 is equipped with a database (DB) that stores a NAPTR record. In response to a query (hereafter referred to as "ENUM query") from one of IP phones A101 - C103, ENUM server 104 transmits, to the IP telephone apparatus that has transmitted the query, the NAPTR record stored in the DB.

CA 105 controls voice communication performed via the IP network among IP telephone apparatuses. For example, CA 105 has a function as a SIP (Session Initiation Protocol) server and controls calls between source and destination IP telephone apparatuses.

In the IP telephone system according to the present embodiment, the DB of ENUM server 104 stores a NAPTR record corresponding to a number (hereafter referred to as "conference number") which identifies a telephone conference being conducted via the IP network. The NAPTR record corresponding to this conference number includes a URI corresponding to an IP telephone apparatus used by a prospective participant. The prospective participant transmits, to ENUM server 104, a query for the NAPTR record corresponding to the conference number and obtains identification information for the prospective participant, which enables the person to take part in the telephone conference.

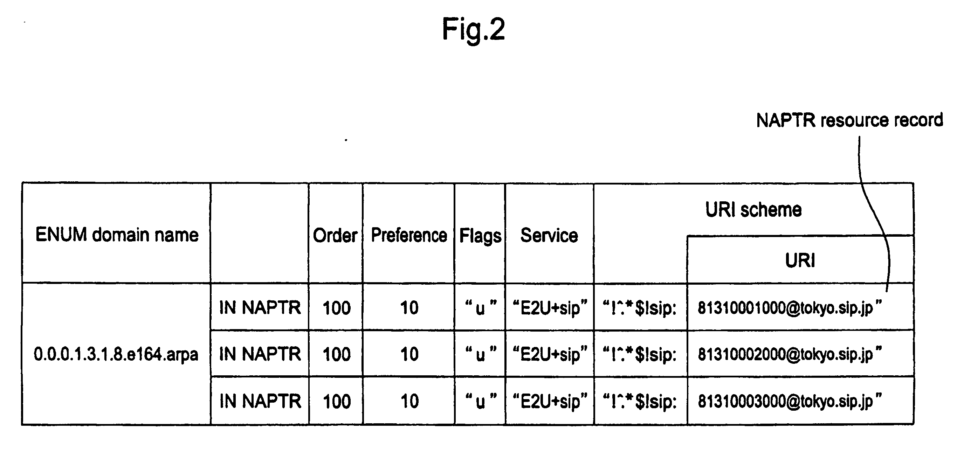

Fig. 2 illustrates an example of a NAPTR record corresponding to a conference number stored in the DB of ENUM server 104 in the IP telephone system according to the present embodiment. The figure shows an example where the DB stores a NAPTR record corresponding to a domain name obtained from conference number "1000".

As shown in Fig. 2, three URIs "81310001000@tokyo.sip.jp", "81310002000@tokyo.sip.jp" and "81310003000@tokyo.sip.jp" correspond to domain name "0.0.0.1.3.1.8.e164.arpa", which is obtained by adding the country code to conference number "1000". In other words, the example shows that there are three prospective participants for the telephone conference identified by conference number "1000". Also, the URIs corresponding to IP telephone apparatuses used by these three participants are stored.

In the present embodiment, a URI stored in a NAPTR record contains a telephone number of a corresponding IP telephone apparatus. More specifically, the telephone number of the IP telephone apparatus is specified before @. In other words, the example shows that "81310001000", "81310002000" and "81310003000" are specified as the telephone numbers.

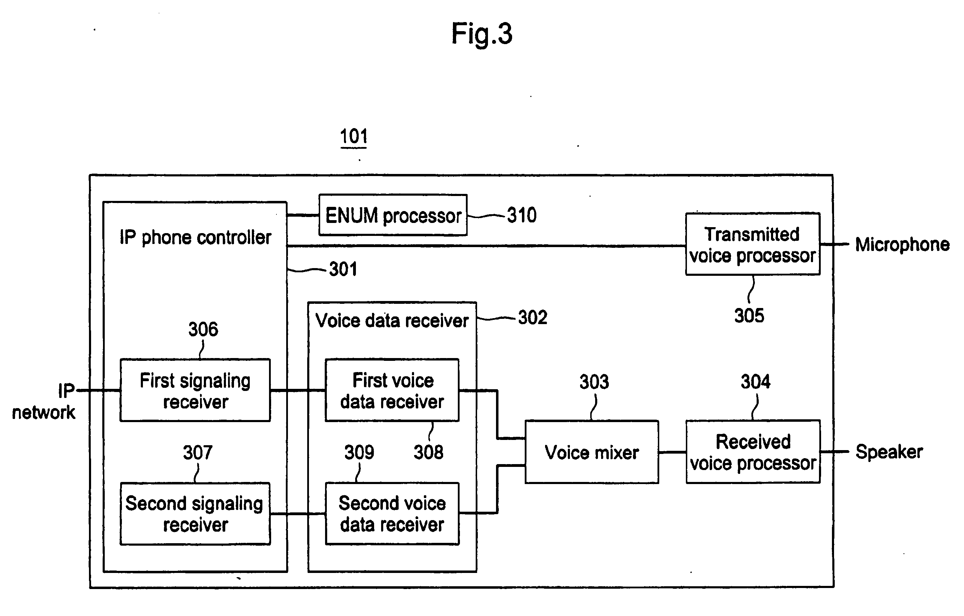

Fig. 3 illustrates a block diagram describing a main function of IP phone A101 in the IP telephone system according to the present embodiment. IP phones B102 and C103 have the same configuration.

IP phone A101 is configured with IP phone controller 301, voice data receiver 302, voice mixer 303, received voice processor 304, transmitted voice processor 305 and ENUM processor 310.

IP phone controller 301 controls all operations needed to perform voice communication with another IP phone via the IP network. For example, IP phone controller 301 performs a call control with CA 105 according to a call control protocol such as SIP. IP phone controller 301 also transmits and receives communication data via the IP network.

IP phone controller 301 is configured with a first signaling receiver 306 and a second signaling receiver 307. The first signaling receiver 306 and the second signaling receiver 307 receive a signal, the signal that is used to control a call output from each IP phone (hereafter referred to as "call control signal"). In this example, the first signaling receiver 306 receives a call control signal output from IP phone B102, and the second signaling receiver 307 receives a call control signal output from IP phone C103. IP phone controller 301 may be configured with more signaling receivers depending on the number of IP phones that attend a telephone conference.

Voice data receiver 302 receives voice data, the voice data being input to voice data receiver 302 after a call control is performed at IP phone controller 301. Voice data receiver 302 is configured with a first voice data receiver 308 and a second voice data receiver 309. The first voice data receiver 308 and the second voice data receiver 309 receive voice data, the voice data being input to the first voice data receiver 308 via the first signaling receiver 306 and to the second voice data receiver 309 via the second signaling receiver 307 respectively. In other words, the first voice data receiver 308 receives voice data transmitted from IP phone B102, and the second voice data receiver 309 receives voice data transmitted from IP phone C103. Voice data receiver 302 may be configured with more voice data receivers depending on the number of IP phones that attend a telephone conference.

Voice mixer 303 mixes voice data input by the first voice data receiver 308 and by the second voice data receiver 309. When voice data are input by either the first voice data receiver 308 or the second voice data receiver 309, a mixing process is not performed on the voice data.

Received voice processor 304 is connected to a speaker attached to a handset of IP phone A101. Through this speaker, voice data input by voice mixer 303 are output to a user. Transmitted voice processor 305 is connected to a microphone attached to the handset of IP phone A101. Voice data received through the microphone are output to IP phone controller 301.

ENUM processor 310 transmits, to ENUM server 104, a query for the above-described NAPTR record via IP phone controller 301, and receives a response to the query.

The following describes a sequence for conducting a telephone conference via the IP network in the IP telephone system having the above-described configuration.

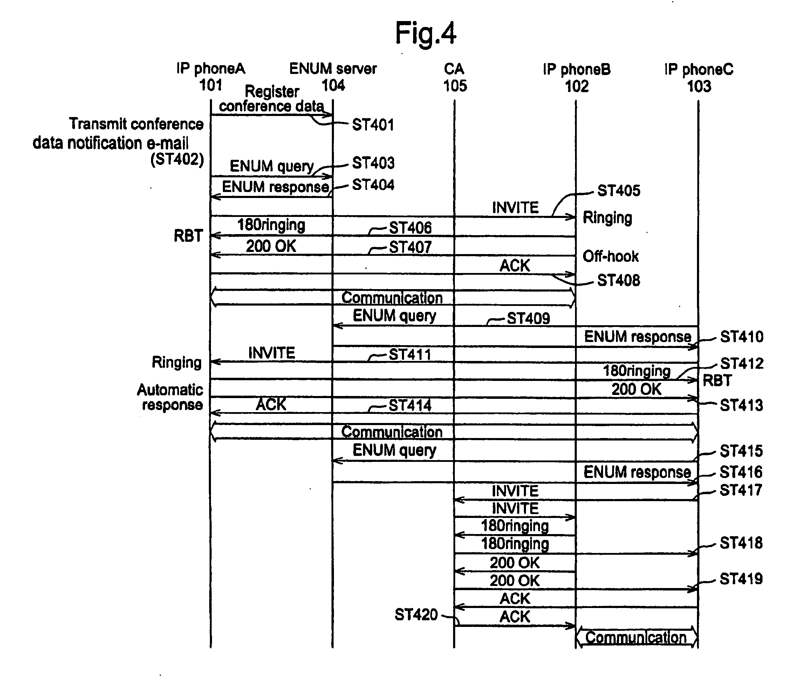

Fig. 4 illustrates a sequence diagram describing an example where the telephone conference is conducted via the IP network in the IP telephone system according to the present embodiment. This figure shows an example where IP phones A101 - C103 have a three-party telephone conference via the IP network.

URIs "81310001000@tokyo.sip.jp", "81310002000@tokyo.sip.jp" and "81310003000@tokyo.sip.jp" are assigned to IP phones A101, B102 and C103 respectively. In other words, telephone numbers "81310001000","81310002000" and "81310003000" are assigned to IP phones A101, B102 and C103 respectively.

When the telephone conference is conducted via the IP network, CA 105 controls calls via the IP network. CA 105 needs to previously register data for each IP telephone apparatus in order to control calls among the IP telephone apparatuses. Prior to proceeding to the Fig. 4 sequence, for example, each IP telephone apparatus transmits the "Register" message to CA 105, after which CA 105 responds by transmitting the "200 OK" message to each IP telephone apparatus. Through these processes, CA 105 previously registers data for each IP telephone apparatus.

In the IP telephone system according to the present embodiment, a person in charge of the telephone conference or a person who coordinates the telephone conference (hereafter referred to as "coordinator" for sake of convenience) needs to specify the conference number and to store, in the DB of ENUM server 104, the NAPTR record corresponding to the conference number. The coordinator also needs to notify prospective participants of conference data such as the conference number, the starting time and the ending time. Any form, such as telephones, faxes or e-mails, may be used to communicate conference data. The following describes an example where emails are used to communicate conference data. In the following case, the user of IP phone A101 is the coordinator. The IP phone A101 user is referred to as "user A", and the users of IP phones B102 and C103 are referred to as "user B" and "user C" respectively.

When the telephone conference is conducted via the IP network, the coordinator first stores conference data on ENUM server 104 (ST 401). Through this storing process, the conference number as well as prospective participants are specified as conference data. In this example, the DB of ENUM server 104 stores the NAPTR record shown in Fig. 2. More specifically, conference number "1000" is specified and the users of IP phones A101 - C103 are specified as the prospective participants.

When the process of storing the conference data on ENUM server 104 is completed, the coordinator transmits, to the prospective participants, an e-mail message for communicating the conference data (hereafter referred to as "conference data notification email") (ST 402). The conference data notification email contains the conference number, the starting time and the ending time. The content is not limited to this example and may include other data.

When the telephone conference is due to begin, the coordinator inputs conference number "1000" through the numerical keys or the like of IP phone A101. The coordinator then instructs IP phone A101 to transmit, to ENUM server 104, an ENUM query for a NAPTR record corresponding to the conference number.

After receiving the conference number and then the instruction for transmitting the ENUM query, IP phone A101 transmits the ENUM query to ENUM server 104 (ST 403). In this example, IP phone A101 first converts the coordinator's input number "1000" into the E.164 number "+81 - 3 - 1000" including the country code. Then, "+8131000" is obtained by maintaining + at the beginning and the numbers. Next, non numerical symbols are deleted, and dots are inserted between the numbers, resulting in "8.1.3.1.0.0.0". Then, the numbers are reversed, and data string ".e164.arpa" is added at the end. As a result, domain name "0.0.0.1.3.1.8.e164.arpa" is obtained. IP phone A 101 then transmits the ENUM query for a NAPTR record corresponding to the domain name.

Upon receiving the ENUM query, ENUM server 104 searches for a NAPTR record corresponding to domain name "0.0.0.1.3.1.8.e164.arpa". ENUM server 104 then transmits, to IP phone A101, an ENUM response including the corresponding NAPTR record (ST 404). In this example, ENUM server 104 transmits, to IP phone A101, the ENUM response including the NAPTR record shown in Fig. 2. When the ENUM response is transmitted to IP phone A101, the coordinator confirms that users B and C are the prospective participants for the telephone conference specified by conference number "1000" as well as the telephone numbers of IP phones B102 and C103.

Upon confirming the telephone numbers of the prospective participants, the coordinator transmits, to IP phone A101, an instruction to call one of these telephone numbers. In response to this call instruction, IP phone A101 transmits, to a selected telephone number, the "INVITE" message via CA 105 (ST 405). In this example, the instruction was made to call IP phone B102.

This example illustrates a case where a call is made to one of these telephone numbers after the coordinator makes the call instruction. However, the process is not limited to this example. It is also possible to make an automatic call to the top telephone number except the telephone number of the source telephone apparatus.

Upon receiving the "INVITE" message, IP phone B102 sounds a ring tone. At the same time, IP phone B102 transmits, to IP phone A101, the "180 Ringing" message via CA 105 (ST 406). IP phone A101 sounds a ring back tone (hereafter referred to as "RBT") in response to the "180 Ringing" message.

When an off-hook operation or other response is detected at IP phone B102 in response to the ring tone, IP phone B102 transmits, to IP phone A101, the "200 OK" message indicating a connection approval via CA 105 (ST 407). Upon receiving the "200 OK" message, IP phone A101 transmits the "ACK" message to IP phone B102 (ST 408).

When the "ACK" message is received at IP phone B102, communication becomes possible between IP phones A101 and B102. At this time, voice communication is performed between IP phones A101 and B102 on a one-to-one basis. Therefore, a mixing process is not performed at voice mixers 303 of IP phones A101 and B102.

In the present embodiment, a case is explained wherein user C joins the telephone conference later while IP phones A101 and B102 are performing voice communication. In order to join the telephone conference later, user C inputs the previously received conference number "1000" through the numerical keys or the like of IP phone C103 and instructs IP phone C103 to transmit an ENUM query for a NAPTR record corresponding to the conference number.

After receiving the conference number and then the instruction for transmitting the ENUM query, IP phone C103 transmits the ENUM query to ENUM server 104 (ST 409). Upon receiving the ENUM query, ENUM server 104 searches for a NAPTR record corresponding to the ENUM query and transmits, to IP phone C103, an ENUM response including the NAPTR record (ST 410). The processes performed by IP phone C103 and by ENUM server 104 are the same as those performed by IP phone A101 in the above-noted ST 403 and ST 404, and their descriptions are therefore omitted.

When IP phone C103 receives the ENUM response from ENUM server 104, user C confirms the telephone numbers of IP phones A101 and B102. In the IP telephone system according to the present embodiment, a participant seeking to join the telephone conference later calls the coordinator for sake of expediency.

In this example, the participant who joins the telephone conference later calls the coordinator. However, the process is not limited to this example. It is also possible for the participant to call a user other than the coordinator and to be allowed to join the telephone conference later.

Upon confirming the telephone number of the coordinator's IP phone A101, user C instructs IP phone C103 to call the telephone number. In response to the call instruction, IP phone C103 transmits, to IP phone A101, the "INVITE" message via CA 105 (ST 411).

Upon receiving the "INVITE" message, IP phone A101 sounds a ring tone. At this time, IP phone A101 is communicating with IP phone B102, and the ring tone is thus added to the voice during the communication. At the same time, IP phone A101 transmits the "180 Ringing" message to IP phone C103 via CA 105 (ST 412). IP phone C103 sounds an RBT (Ring Back Tone) in response to the "180 Ringing" message.

When the "INVITE" message is received during the communication with another IP telephone apparatus, IP phone A101 is set to automatically respond to the ring tone. After the automatic response is made, IP phone A101 transmits, to IP phone C103, the "200 OK" message indicating a connection approval via CA 105 (ST 413). Upon receiving the "200 OK" message, IP phone C103 transmits the "ACK" message to IP phone A101 (ST 414).

The example shows a case where IP phone A101 automatically responds to the "INVITE" message. However, the process is not limited to this example. It is also possible to have IP phone A101 respond in response to a coordinator's instruction. In this case, the coordinator can determine when letting the delayed participant join the telephone conference. This enables the person to join the telephone conference late without interrupting the telephone conference.

When the "ACK" message is received at IP phone A101, IP phone A101 becomes able to communicate with the two parties, IP phones B102 and C103. At this time, IP phone A101 performs voice communication with the other two IP phones. Therefore, a mixing process is performed at voice mixer 303 of IP phone A101.

In other words, voice mixer 303 of IP phone A101 performs a mixing process on voice data output from IP phones B102 and C103. In addition, voice output from IP phone A101 is transmitted to IP phones B102 and C103. In this way, IP phone A101 communicates with IP phones B102 and C103.

Next, IP phones B102 and C103 get connected. In the present embodiment, a case is explained wherein user C joins the telephone conference later while IP phones A101 and B102 are engaging in voice communication. In the present embodiment, the coordinator instructs, through voice communication, user C to place a call from IP phone C103 to IP phone B102.

Upon receiving this instruction, user C inputs the previously notified conference number "1000" through the numerical keys or the like of IP phone C103, and instructs IP phone C103 to transmit an ENUM query for a NAPTR record corresponding to the conference number.

Upon receiving the conference number and then the instruction for transmitting the ENUM query, IP phone C103 transmits, to ENUM server 104, the ENUM query (ST 415). When receiving the ENUM query, ENUM server 104 searches for a NAPTR record corresponding to the ENUM query, and transmits, to IP phone C103, an ENUM response including the NAPTR record (ST 416). When IP phone C103 receives the ENUM response from ENUM server 104, user C confirms the telephone number of IP phone B102.

In this example, the coordinator instructs user C, through voice communication, to place a call from IP phone C103 to IP phone B102. However, the process is not limited to this example. It is possible that the coordinator instructs, through voice communication, instructs user B to place a call from IP phone B102 to IP phone C103.

Upon confirming the telephone number of IP phone B102, user C instructs IP phone C103 to place a call to the telephone number. In response to the call instruction, IP phone C103 transmits the "INVITE" message to IP phone B102 via CA 105 (ST 417).

Upon receiving the "INVITE" message, IP phone B102 sounds a ring tone. At this time, IP phone B102 is communicating with IP phone A101, and the ring tone is thus added to the voice during the communication. At the same time, IP phone B102 transmits the "180 Ringing" message to IP phone C103 via CA 105 (ST 418). IP phone C103 sounds an RBT (Ring Back Tone) in response to the "180 Ringing" message, and the RBT is also added to the voice during the communication.

When the "INVITE" message is received during the communication with another IP telephone apparatus, IP phone B102 is set to automatically respond to the ring tone. After the automatic response is made, IP phone B102 transmits, to IP phone C103, the "200 OK" message indicating a connection approval via CA 105 (ST 419). Upon receiving the "200 OK" message, IP phone C103 transmits the "ACK" message to IP phone B102 (ST 420).

The example shows a case where IP phone B102 automatically responds to the "INVITE" message. However, the process is not limited to this example. It is also possible to have IP phone B102 respond in response to a coordinator's instruction. In this case, the coordinator can determine when letting the delayed participant join the telephone conference. This enables the person to join the telephone conference late without interrupting the telephone conference.

When the "ACK" message is received at IP phone C103, communication is performed among the three parties, IP phones A101, B102 and C103. In other words, IP phones B102 and C103, same as IP phone A101, perform voice communication with the other two IP phones.

The following describes the operations of IP phones A101, B102 and C103 in the Fig. 4 sequence.

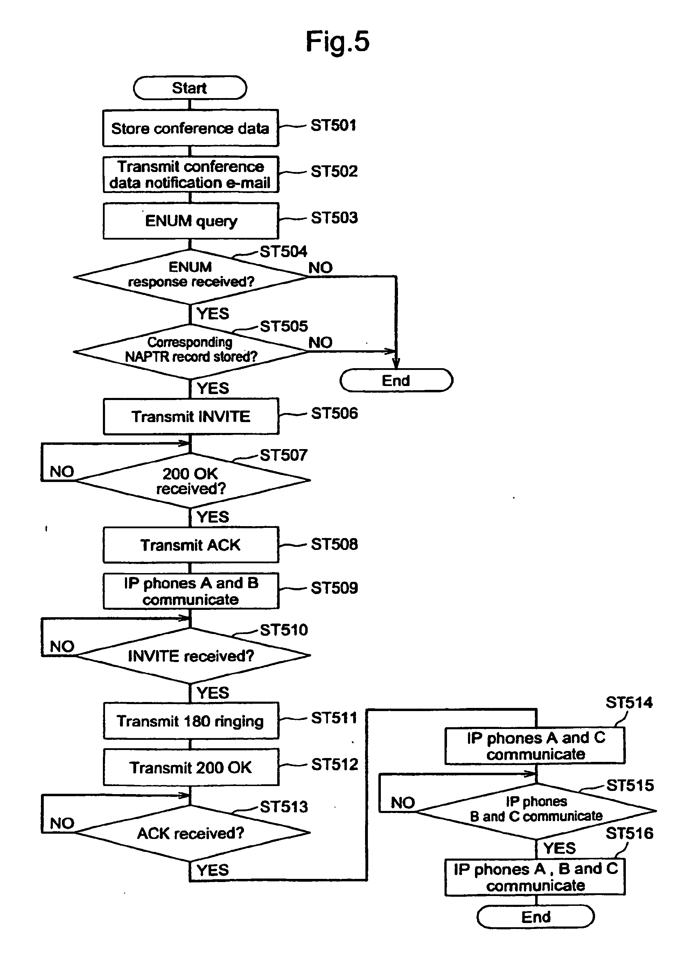

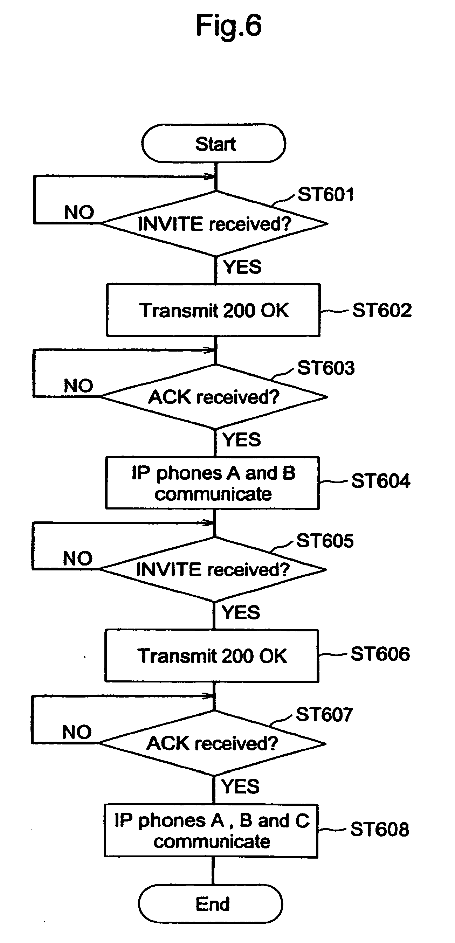

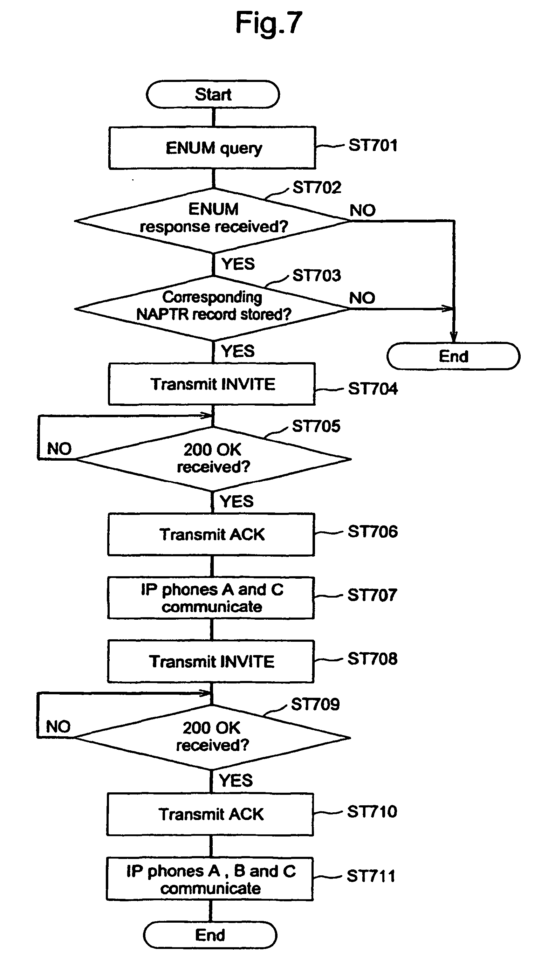

Fig. 5 illustrates a flow chart describing the operation of IP phone A101 in the Fig. 4 sequence. Fig. 6 illustrates a flow chart describing the operation of IP phone B102 in the Fig. 4 sequence. Fig. 7 illustrates a flow chart describing the operation of IP phone C103 in the Fig. 4 sequence.

When the operation is performed according to the Fig. 4 sequence, IP phone A101 first stores conference data on ENUM server 104 according to a coordinator's instruction as shown in Fig. 5 (ST 501). After completing the process for storing the conference data, IP phone A101 transmits a conference data notification email to a prospective participant (ST 502). In this case, the conference data notification email is transmitted to uses B and C.

When the telephone conference is due to begin, IP phone A101 transmits, to ENUM server 104, an ENUM query according to the coordinators instruction (ST 503), after which IP phone A101 waits for reception of an ENUM response (ST 504). When the ENUM response is received, it is determined whether a NAPTR record corresponding to the ENUM query is included in the ENUM response (ST 505). When no corresponding NAPTR record is included and no ENUM response is received in ST 504, IP phone A101 determines that the communication was unsuccessful and terminates the process.

When the NAPTR record corresponding to the ENUM query is included in the ENUM response, IP phone A101 places a call to the telephone number of another IP telephone apparatus according to the coordinator's instruction. At this time, IP phone A101 transmits the "INVITE" message to another IP telephone apparatus (ST 506). In this case, the "INVITE" message is transmitted to IP phone B102.

After transmitting the "INVITE" message, IP phone A101 determines whether the "200 OK" message is received (ST 507). When the "200 OK" message is received, IP phone A101 transmits the "ACK" message (ST 508). IP phone A101 continues to monitor for reception of the "200 OK" message until it is received.

After the transmitted "ACK" message is received at IP phone B102, communication becomes possible between IP phones A101 and B102. Voice communication starts between IP phones A101 and B102 by exchanging voice data (ST 509).

While communicating with IP phone B102, IP phone A101 monitors for reception of the "INVITE" message from another IP telephone apparatus (ST 510). When the "INVITE" message is received from another IP telephone apparatus, IP phone A101 adds a ring tone to the voice during the communication. IP phone A101 also transmits, to the IP telephone that has transmitted the "INVITE" message, the "180 Ringing" message (ST 511). In this case, IP phone A101 receives the "INVITE" message from IP phone C103 and transmits the "180 Ringing" message to IP phone C103.

When IP phone A101 receives the "INVITE" message while communicating with another IP telephone apparatus, IP phone A101 automatically responds to a ring tone, which sounds in response to the "INVITE" message. After making the automatic response, IP phone A101 transmits the "200 OK" message via CA 105 (ST 512). In this case, IP phone A101 transmits the "200 OK" message to IP phone C103.

After transmitting the "200 OK" message, IP phone A101 determines whether the "ACK" message is received (ST 513). When the "ACK" message is received, communication becomes possible between IP phones A101 and C103. After that, voice communication starts between IP phones A101 and C103 by exchanging voice data (ST 514).

Next, IP phone A101 determines whether communication is possible between IP phones B102 and C103 (ST 515). When the two phones are ready to communicate, voice communication becomes possible among IP phones A101, B102 and C103. The three-party communication starts among IP phones A101, B102 and C103 by exchanging voice data (ST 516).

When the three-party communication is performed, voice mixer 303 of IP phone A101 mixes voice data output from IP phones B102 and C103. User A performs voice communication while hearing this mixed voice data.

Regarding IP phone B102, when performing operations according to the Fig. 4 sequence, IP phone B102 first monitors for reception of the "INVITE" message from IP phone A101 as shown in Fig. 6 (ST 601). When confirming reception of the "INVITE" message, IP phone B102 transmits, to IP phone A101, the "180 ringing" message and then the "200 OK" message (ST 602).

Next, IP phone B102 determines whether the "ACK" message is received from IP phone A101 (ST 603). IP phone B102 continues to monitor for reception of the "ACK" message until it is received. When the "ACK" message is received at IP phone B102, communication becomes possible between IP phones A101 and B102. Voice communication starts between IP phones A101 and B101 by exchanging voice data (ST 604).

While communicating with IP phone A101, IP phone B102 monitors for reception of the "INVITE" message from IP phone C103 (ST 605). When confirming reception of the "INVITE" message, IP phone B102 transmits, to IP phone C103, the "180 Ringing" message and then the "200 OK" message (ST 606).

Next, IP phone B102 determines whether the "ACK" message is received from IP phone C103 (ST 607). IP phone B102 continues to monitor for reception of the "ACK" message until it is received. When the "ACK" message is received at IP phone B102, communication becomes possible among the three parties, IP phones A101, B102 and C103. After that, voice communication starts among the three parties, IP phones A101, B102 and C103 by exchanging voice data (ST 608).

Regarding IP phone C103, when the operations are performed according to the Fig. 4 sequence, IP phone C103 first transmits an ENUM query to ENUM server 104 as shown in Fig. 7 (ST 701). After that, IP phone C103 waits for an ENUM response (ST 702). When the ENUM response is received, it is determined whether a NAPTR record corresponding to the ENUM query is included in the ENUM response (ST 703). On the other hand, when no corresponding NAPTR is included and no ENUM response is received in ST 702, IP phone C103 determines that the communication was unsuccessful and terminates the process.

When the NAPTR record corresponding to the ENUM query is included in the ENUM response, IP phone C103 places a call to the coordinator's IP telephone apparatus according to an instruction from user C. At this time, IP phone C103 transmits the "INVITE" message to the coordinator's IP telephone apparatus (ST 704). In this case, IP phone C103 transmits the "INVITE" message to IP phone A101.

After transmitting the "INVITE" message, IP phone C103 determines whether the "200 OK" message is received from IP phone A101 (ST 705). When the "200 OK" message is received, IP phone C103 transmits, to IP phone A101, the "ACK" message (ST 706). IP phone C103 continues to monitor for reception of the "200 OK" message until it is received.

When the transmitted "ACK" message is received at IP phone A101, communication becomes possible between IP phones A101 and C103. Voice communication starts between IP phones A101 and C103 by exchanging voice data (ST 707).

When the NAPTR record of IP phone B102 that corresponds to the ENUM query is included in the ENUM response, IP phone C103 places a call to the telephone number of another IP telephone apparatus according to an instruction from user C. At this time, IP phone C103 transmits the "INVITE" message to IP phone B102 (ST 708).

After transmitting the "INVITE" message, IP phone C103 determines whether the "200 OK" message is received from IP phone B102 (ST 709). When the "200 OK" message is received, IP phone C103 transmits the "ACK" message to IP phone B102 (ST 710). IP phone C103 continues to monitor for reception of the "200 OK" message until it is received.

When the transmitted "ACK" message is received at IP phone B102, communication becomes possible between IP phones B102 and C103. At this time, voice communication starts among the three parties, IP phones A101, B102 and C103 (ST 711).

When the three-party communication is performed, voice mixer 303 of IP phone C103 mixes voice data output from IP phones A101 and B102. User C performs voice communication while hearing this mixed voice data.

As described above, the telephone conference is conducted in the form of a three-party call among users A, B and C. To end the telephone conference, each user performs a terminating process. The telephone conference concludes through the terminating process.

As described above, in the IP telephone system according to the present embodiment, an IP telephone apparatus that attends a telephone conference transmits, to ENUM server 104, a query for a NAPTR record by specifying a conference number. According to the received NAPTR record, the IP telephone apparatus obtains identification information for another IP telephone apparatus that is scheduled to attend the telephone conference and places a call based on the identification information. After that, the IP telephone apparatus performs a mixing process on communication data output from another IP telephone apparatus. This process eliminates the need to individually provide conference participants with information including another participant's telephone number. As a result, using the IP telephone system reduces labor required to prepare for the telephone conference, thus making it possible to conduct the telephone conference smoothly.

Particularly, in the IP telephone system according to the present embodiment, the DB of ENUM server 104 stores a NAPTR record specifying, in a URI, a telephone number of an IP telephone apparatus. Therefore, an IP telephone apparatus that is scheduled to attend the telephone conference can obtain the telephone number of another IP telephone apparatus that is scheduled to attend the telephone conference. Then, the IP telephone apparatus is able to place a call to another participating IP telephone apparatus using the obtained telephone number.

In the IP telephone system according to the present embodiment, the IP telephone apparatus performs a mixing process on communication data output from other IP telephone apparatuses. Therefore, it is possible to have a real-time telephone conference among three or more IP telephone apparatuses. Particularly, in the IP telephone system according to the present embodiment, the IP telephone apparatus performs a mixing process on voice data output from other IP telephone apparatuses. Therefore, it is possible to have a real-time telephone conference among three or more IP telephone apparatuses, using the voice data.

Further, in the IP telephone system according to the present embodiment, a case is explained wherein the IP telephone apparatus performs a mixing process on voice data output from other IP telephone apparatuses. However, the process is not limited to this case. It is also possible to have another IP telephone apparatus output image data and to have the IP telephone apparatus perform a mixing process on the voice data as well as the image data. In this case, it is possible to have a real-time telephone conference among three or more IP telephone apparatuses, using the voice data as well as the image data.

In the IP telephone system according to the present embodiment, a case is explained wherein a three-party telephone conference is conducted by the coordinator placing a call to the telephone number of IP phone B102. The communication then starts between IP phones A101 and B102, after which user C joins the telephone conference, performing a three-party telephone conference. However, the process is not limited to this example. It is also possible for the coordinator to call the telephone numbers of IP phone B102 and IP phone C103 in this order and to conduct a telephone conference among the three parties after communication becomes possible among users A, B and C. In this case, all participants can speak in the telephone conference from the beginning, and thus more efficient conference operation becomes possible.

Further, in the above description, the IP telephone apparatus according to the present invention performs under a SIP as a VoIP protocol. However, the process is not limited to this case. In other words, the configuration may apply to an IP telephone apparatus that performs under H.323 or MGCP (Media Gateway Control Protocol) as the VoIP protocol.

The IP telephone described above includes an IP telephone apparatus defined by the government and operated by a telecommunications provider. It also includes an IP telephone provided on a local network or a private network using TCP/IP or other computer network protocols.

In the above description, a CA controls calls by relaying SIP messages using a signaling technology. However, the presence or absence of the CA does not constrain the present invention.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2004 - 232740 filed on August 9, 2004.

## Claims

1. IP telephone system comprising:
an ENUM, tElephone NUmber Mapping, server (104) adapted to store a NAPTR, Naming Authority Pointer, resource record corresponding to a domain name; and
an IP telephone apparatus (101) adapted to transmit a request for the NAPTR resource record based on the domain name to the ENUM server (104), and to receive the NAPTR resource record corresponding to the domain name;
**characterized in that**
the ENUM server (104) is adapted to store a conference number as the domain name, the NAPTR resource record including telephone numbers of conference participants, the conference number indicating a telephone conference performed among the IP telephone apparatus (101) and at least two other IP telephone apparatuses (102, 103), and the conference number identifying the at least two other IP telephone apparatuses (102, 103); and
the IP telephone apparatus (101) is adapted to:
allow an input of the conference number,
convert the input conference number into the domain name,
receive the NAPTR resource record corresponding to the inputted conference number from the ENUM server (104) in response to the request of the IP telephone apparatus (101), the received NAPTR resource record including telephone numbers of conference participants,
access the other IP telephone apparatuses (102, 103) for a telephone conference via the internet, based on the telephone number of conference participants included in the received NAPTR resource record, and
perform mixing (303) of communication data with at least two other IP telephone apparatuses (102, 103), the at least two other IP telephone apparatuses (102, 103) being included in the telephone conference.

2. The IP telephone system according to claim 1, wherein:
the NAPTR resource record includes a plurality of URIs, the telephone number of each of the at least two other IP telephone apparatuses (102, 103) being set in each of the plurality of the URIs; and
the IP telephone apparatus (101) is further adapted to access one of the at least two other IP telephone apparatuses (102, 103) for the telephone conference via the internet, based on the telephone number of one of the at least two other IP telephone apparatuses (102, 103) included in one of the plurality of the URIs.

3. The IP telephone system according to claim 1, wherein the IP telephone apparatus (101) is further adapted to perform mixing (303) of voice data with the at least two other IP telephone apparatuses (102, 103).

4. The IP telephone system according to claim 1, wherein the IP telephone apparatus (101) is further adapted to perform mixing of voice data and image data with the at least two other IP telephone apparatuses (102, 103).

5. The IP telephone system according to claim 1, wherein the IP telephone apparatus (101) is further adapted to access the at least another two IP telephone apparatus (102, 103) for a call via the Internet, based on the telephone numbers of conference participants included in the NAPTR resource record without user intervention at the IP telephone apparatus (101).

6. The IP telephone system according to claim 1, wherein the IP telephone apparatus (101) is further adapted to:
allow an input of a telephone number identifying one of the at least two other IP telephone apparatuses (102, 103)from a user of the IP telephone apparatus (101); and
access the one of the at least two other IP telephone apparatuses (102, 103) for the telephone conference via the internet, based on the inputted telephone number.

7. An IP telephone apparatus connected to an ENUM server (104), the ENUM server (104) being adapted to store a NAPTR, Naming Authority Pointer, resource record corresponding to a domain name, the IP telephone apparatus (101) comprising:
a controller (301) adapted to:
transmit a request for the NAPTR resource record based on the domain name to the ENUM server (104), and to receive the NAPTR resource record corresponding to the domain name;
**characterized by**
an input device adapted to input a conference number; and
wherein the controller (301) is adapted to:
convert the inputted conference number into the domain name,
receive the NAPTR resource record corresponding to the inputted conference number from the ENUM server (104) in response to the request of the IP telephone apparatus, the received NAPTR resource record including telephone numbers of conference participants;
access the other IP telephone apparatuses (102, 103) for a telephone conference via the Internet, based on the telephone numbers of conference participants included in the received NAPTR resource record, and
perform mixing (303) of communication data with at least two other IP telephone apparatuses (102, 103), the at least two other IP telephone apparatuses (102, 103) being included in the telephone conference.

8. A telephone conference method, using an ENUM server (104), the ENUM server (104) storing a NAPTR, Naming Authority Pointer, resource record corresponding to a domain name, the telephone conference method comprising the steps of:
inputting the conference number into the IP telephone apparatus (101);
converting the inputted conference number into the domain name;
transmitting, to the ENUM server (104), a request for the NAPTR resource record, based on the domain name;
receiving, from the ENUM server (104), the NAPTR resource record corresponding to the inputted conference number in response to the request of the IP telephone apparatus (101), the NAPTR resource record including telephone numbers of conference participants;
accessing the other IP telephone apparatuses (102, 103) for a telephone conference via the internet, based on the telephone numbers of conference participants included in the received NAPTR resource record, and
perform mixing (303) of communication data with at least two other IP telephone apparatuses (102, 103), the at least two other IP telephone apparatuses (102, 103) being included in the telephone conference.

9. The telephone conference method according to claim 8, wherein:
the NAPTR resource record includes a plurality of URIs, a telephone number of each of the at least two other IP telephone apparatuses (102, 103) being set in each of the plurality of the URIs; and
said step of accessing comprises accessing one of the at least two other IP telephone apparatuses (102, 103) for the telephone conference via the internet, based on the telephone number of one of the at least two other IP telephone apparatuses (102, 103) included in one of the plurality of the URIs.

## Patentansprüche

1. IP-basiertes Telefonsystem, das umfasst:
einen ENUM-Server, tElephone NUmber Mapping, (104), der dazu eingerichtet ist, einen NAPTR-Ressourceneintrag, Naming Authority Pointer, zu speichern, der mit einem Domainnamen korrespondiert; und
ein IP-basiertes Telefon (101), das dazu eingerichtet ist, eine Forderung nach dem NAPTR-Ressourceneintrag auf der Basis des Domainnamens an den ENUM-Server (104) zu senden und den NAPTR-Ressourceneintrag zu empfangen, der mit dem Domainnamen korrespondiert;
**dadurch gekennzeichnet, dass**
der ENUM-Server (104) dazu eingerichtet ist, eine Konferenznummer als den Domainnamen zu speichern, wobei der NAPTR-Ressourceneintrag Telefonnummern von Konferenzteilnehmern enthält, wobei die Konferenznummer eine Telefonkonferenz anzeigt, die zwischen dem IP-basierten Telefon (101) und mindestens zwei weiteren IP-basierten Telefonen (102, 103) durchgeführt wird, und wobei die Konferenznummer die mindestens zwei weiteren IP-basierten Telefone (102, 103) identifiziert; und
das IP-basierte Telefon (101) dazu eingerichtet ist:
eine Eingabe der Konferenznummer zuzulassen,
die eingegebene Konferenznummer in den Domainnamen umzuwandeln,
den NAPTR-Ressourceneintrag, der mit der eingegebenen Konferenznummer korrespondiert, vom dem ENUM-Server (104) als Antwort auf die Forderung des IP-basierten Telefons (101) zu empfangen, wobei der empfangene NAPTR-Ressourceneintrag die Telefonnummern der Konferenzteilnehmer enthält,
auf die anderen IP-basierten Telefone (102, 103) für eine Telefonkonferenz über das Internet zuzugreifen, basierend auf den Telefonnummern der Konferenzteilnehmer, die in dem NAPTR-Ressourceneintrag enthalten sind, und
das Mischen (303) von Kommunikationsdaten mit mindestens zwei weiteren IP-basierten Telefonen (102, 103) durchzuführen, wobei die mindestens zwei weiteren IP-basierten Telefone (102, 103) in der Telefonkonferenz eingeschlossen sind.

2. IP-basiertes Telefonsystem nach Anspruch 1, wobei:
der NAPTR-Ressourceneintrag eine Vielzahl von URIs enthält und die Telefonnummer jedes der mindestens zwei weiteren IP-basierten Telefone (102, 103) in jedem der Vielzahl der URIs eingestellt ist; und
das IP-basierte Telefon (101) weiterhin dazu eingerichtet ist, auf eines der mindestens zwei weiteren IP-basierten Telefone (102, 103) für die Telefonkonferenz über das internet zuzugreifen, basierend auf der Telefonnummer eines der mindestens zwei weiteren IP-basierten Telefone (102, 103), die in einem der Vielzahl der URIs enthalten ist.

3. IP-basiertes Telefonsystem nach Anspruch 1, wobei das IP-basierte Telefon (101) weiterhin dazu eingerichtet ist, das Mischen (303) von Stimmdaten mit den mindestens zwei weiteren IP-basierten Telefonen (102, 103) durchzuführen.

4. IP-basiertes Telefonsystem nach Anspruch 1, wobei das IP-basierte Telefon (101) weiterhin dazu eingerichtet ist, das Mischen von Stimmdaten und Bilddaten mit den mindestens zwei weiteren IP-basierten Telefonen (102, 103) durchzuführen.

5. IP-basiertes Telefonsystem nach Anspruch 1, wobei das IP-basierte Telefon (101) weiterhin dazu eingerichtet ist, ohne Benutzereingriff an dem IP-basierten Telefon (101) auf die mindestens zwei weiteren IP-basierten Telefone (102, 103) für einen Anruf über das Internet zuzugreifen, basierend auf den Telefonnummern der Konferenzteilnehmer, die in dem NAPTR-Ressourceneintrag enthalten sind.

6. IP-basiertes Telefonsystem nach Anspruch 1, wobei das IP-basierte Telefon (101) weiterhin dazu eingerichtet ist:
eine Eingabe einer Telefonnummer zuzulassen, die eines der mindestens zwei weiteren IP-basierten Telefone (102, 103) identifiziert, durch einen Benutzer des IP-basierten Telefons (101); und
auf das eine der mindestens zwei weiteren IP-basierten Telefone (102, 103) für die Telefonkonferenz über das Internet zuzugreifen, basierend auf der eingegebenen Telefonnummer.

7. IP-basiertes Telefon, das mit einem ENUM-Server (104) verbunden ist, wobei der ENUM-Server (104) dazu eingerichtet ist, einen NAPTR-Ressourceneintrag, Naming Authority Pointer, zu speichern, der mit einem Domainnamen korrespondiert, und wobei das IP-basierte Telefon (101) umfasst:
eine Steuerung (301), die dazu eingerichtet ist:
eine Forderung nach dem NAPTR-Ressourceneintrag auf der Basis des Domainnamens an den ENUM-Server (104) zu senden, und den NAPTR-Ressourceneintrag zu empfangen, der mit dem Domainnamen korrespondiert;
**gekennzeichnet durch**
eine Eingabevorrichtung, die zur Eingabe einer Konferenznummer eingerichtet ist; und
wobei die Steuerung (301) dazu eingerichtet ist:
die eingegebene Konferenznummer in den Domainnamen umzuwandeln,
den NAPTR-Ressourceneintrag, der mit der eingegebenen Konferenznummer korrespondiert, vom dem ENUM-Server (104) als Antwort auf die Forderung des IP-basierten Telefons zu empfangen, wobei der empfangene NAPTR-Ressourceneintrag die Telefonnummern der Konferenzteilnehmer enthält;
auf die anderen IP-basierten Telefone (102, 103) für eine Telefonkonferenz über das Internet zuzugreifen, basierend auf den Telefonnummern der Konferenzteilnehmer, die in dem NAPTR-Ressourceneintrag enthalten sind, und
das Mischen (303) von Kommunikationsdaten mit mindestens zwei weiteren IP-basierten Telefonen (102, 103) durchzuführen, wobei die mindestens zwei weiteren IP-basierten Telefone (102, 103) in der Telefonkonferenz eingeschlossen sind.

8. Verfahren zur Durchführung einer Telefonkonferenz unter Verwendung eines ENUM-Servers (104), wobei der ENUM-Server (104) einen NAPTR-Ressourceneintrag, Naming Authority Pointer, speichert, der mit einem Domainnamen korrespondiert, und wobei das Verfahren zur Durchführung einer Telefonkonferenz folgende Schritte umfasst:
Eingeben der Konferenznummer in das IP-basierte Telefon (101);
Umwandeln der eingegebenen Konferenznummer in den Domainnamen;
Senden einer Forderung nach dem NAPTR-Ressourceneintrag auf der Basis des Domainnamens an den ENUM-Server (104);
Empfangen des NAPTR-Ressourceneintrags, der mit der eingegebenen Konferenznummer korrespondiert, vom dem ENUM-Server (104) als Antwort auf die Forderung des IP-basierten Telefons, wobei der empfangene NAPTR-Ressourceneintrag die Telefonnummern der Konferenzteilnehmer enthält;
Zugreifen auf die anderen IP-basierten Telefone (102, 103) für eine Telefonkonferenz über das Internet, basierend auf den Telefonnummern der Konferenzteilnehmer, die in dem NAPTR-Ressourceneintrag enthalten sind, und
Durchführen des Mischens (303) von Kommunikationsdaten mit mindestens zwei weiteren IP-basierten Telefonen (102, 103), wobei die mindestens zwei weiteren IP-basierten Telefone (102, 103) in der Telefonkonferenz eingeschlossen sind.

9. Verfahren zur Durchführung einer Telefonkonferenz nach Anspruch 8, wobei:
der NAPTR-Ressourceneintrag eine Vielzahl von URIs enthält und eine Telefonnummer jedes der mindestens zwei weiteren IP-basierten Telefone (102, 103) in jedem der Vielzahl der URIs eingestellt ist; und
der Schritt des Zugreifens das Zugreifen auf eines der mindestens zwei IP-basierten Telefone (102, 103) für die Telefonkonferenz über das Internet umfasst, basierend auf der Telefonnummer eines der mindestens zwei weiteren IP-basierten Telefone (102, 103), die in einem der Vielzahl der URIs enthalten ist.

## Revendications

1. Système de téléphonie au protocole IP comprenant :
un serveur ENUM (104), de mappage de numéros de téléphone (tElephone NUmber Mapping) conçu pour mémoriser un enregistrement de ressources NAPTR, d'un pointeur d'autorité d'attribution d'un nom, correspondant à un nom de domaine, et
un téléphone au protocole IP (101) conçu pour transmettre au serveur ENUM (104) une demande pour l'enregistrement de ressources NAPTR sur la base du nom de domaine, et pour recevoir l'enregistrement de ressources NAPTR correspondant au nom de domaine,
**caractérisé en ce que**
le serveur ENUM (104) est conçu pour mémoriser un numéro de conférence en tant que nom de domaine, l'enregistrement de ressources NAPTR incluant les numéros de téléphone de participants à une conférence, le numéro de la conférence indiquant une conférence téléphonique effectuée entre le téléphone au protocole IP (101) et au moins deux autres téléphones au protocole IP (102, 103), et le numéro de la conférence identifiant les, au moins deux, autres téléphones au protocole IP (102, 103), et
le téléphone au protocole IP (101) est conçu pour :
permettre la saisie d'un numéro de conférence,
convertir le numéro de conférence saisi en ce nom de domaine,
recevoir l'enregistrement des ressources NAPTR correspondant au numéro de conférence saisi provenant du serveur ENUM (104) en réponse à la demande du téléphone au protocole IP (101), l'enregistrement des ressources NAPTR reçu incluant les numéros de téléphone des participants à la conférence,
accéder aux autres téléphones au protocole IP (102, 103) en vue d'une conférence téléphonique par l'intermédiaire du réseau Internet sur la base du numéro de téléphone des participants à la conférence qui est inclus dans l'enregistrement des ressources NAPTR, et
effectuer un mixage (303) de données de communication avec au moins deux autres téléphones au protocole IP (102, 103), les, au moins deux, autres téléphones au protocole IP (102, 103) étant inclus dans la conférence téléphonique.

2. Système de téléphonie au protocole IP selon la revendication 1, dans lequel :
l'enregistrement des ressources NAPTR inclut une pluralité d'identificateurs uniformes de ressources, URI, dont le numéro de téléphone de chacun des, au moins deux, autres téléphones au protocole IP (102, 103) est fixé dans chacun de la pluralité des identificateurs URI, et
le téléphone au protocole IP (101) est en outre conçu pour accéder à l'un des, au moins deux, autres téléphones au protocole IP (102, 103) participant à la conférence téléphonique par l'intermédiaire du réseau Internet, sur la base du numéro de téléphone de l'un des, au moins deux, autres téléphones au protocole IP (102, 103), inclus dans l'un de la pluralité des identificateurs URI.

3. Système de téléphonie au protocole IP selon la revendication 1, dans lequel le téléphone au protocole IP (101) est en outre conçu pour effectuer le mixage (303) de données vocales avec les, au moins deux, autres téléphones au protocole IP (102, 103).

4. Système de téléphonie au protocole IP selon la revendication 1, dans lequel le téléphone au protocole IP (101) est en outre conçu pour effectuer le mixage de données vocales et de données d'images avec les, au moins deux, autres téléphones au protocole IP (102, 103).

5. Système de téléphonie au protocole IP selon la revendication 1, dans lequel le téléphone au protocole IP (101) est en outre conçu pour accéder à au moins deux autres téléphones au protocole IP (102, 103) en vue d'un appel par l'intermédiaire du réseau Internet, sur la base des numéros de téléphone des participants à la conférence inclus dans l'enregistrement des ressources NAPTR, sans intervention de l'utilisateur au niveau du téléphone au protocole IP (101).

6. Système de téléphonie au protocole IP selon la revendication 1, dans lequel le téléphone au protocole IP (101) est en outre conçu pour :
permettre la saisie d'un numéro de téléphone identifiant l'un des, au moins deux, autres téléphones au protocole IP (102, 103) par l'utilisateur du téléphone au protocole IP (101), et
accéder à celui des, au moins deux, autres téléphones au protocole IP (102, 103) en vue de la conférence téléphonique par l'intermédiaire du réseau Internet, sur la base du numéro de téléphone saisi.

7. Téléphone au protocole IP relié à un serveur ENUM (104), le serveur ENUM (104) étant conçu pour mémoriser un enregistrement de ressources NAPTR, d'un pointeur d'autorité d'attribution d'un nom, correspondant à un nom de domaine, le téléphone au protocole IP (101) comprenant :
un contrôleur (301) conçu pour :
transmettre au serveur ENUM (104) une demande pour l'enregistrement de ressources NAPTR sur la base du nom de domaine, et pour recevoir l'enregistrement de ressources NAPTR correspondant au nom de domaine,
**caractérisé par**
un dispositif de saisie conçu pour saisir un numéro d'une conférence, et
dans lequel le contrôleur (301) est conçu pour :
convertir le numéro de conférence saisi en ce nom de domaine,
recevoir l'enregistrement des ressources NAPTR correspondant au numéro de conférence saisi provenant du serveur ENUM (104) en réponse à la demande du téléphone au protocole IP, l'enregistrement des ressources NAPTR incluant les numéros de téléphone des participants à la conférence,
accéder aux autres téléphones au protocole IP (102, 103) en vue d'une conférence téléphonique par l'intermédiaire du réseau Internet sur la base des numéros de téléphone des participants à la conférence qui sont inclus dans l'enregistrement reçu des ressources NAPTR, et
effectuer un mixage (303) de données de communication avec au moins deux autres téléphones au protocole IP (102, 103), les, au moins deux, autres téléphones au protocole IP (102, 103) étant inclus dans la conférence téléphonique.

8. Procédé de conférence téléphonique utilisant un serveur ENUM (104), le serveur ENUM (104) mémorisant un enregistrement de ressources NAPTR, d'un pointeur d'autorité d'attribution d'un nom, correspondant à un nom de domaine, le procédé de conférence téléphonique comprenant les étapes suivantes :
la saisie du numéro de conférence dans le téléphone au protocole IP (101),
la conversion du numéro de conférence saisi en ce nom de domaine,
la transmission, au serveur ENUM (104), d'une demande pour l'enregistrement des ressources NAPTR sur la base du nom de domaine,
la réception, en provenance du serveur ENUM (104), de l'enregistrement des ressources NAPTR correspondant au numéro de conférence saisi en réponse à la demande du téléphone au protocole IP (101), l'enregistrement des ressources NAPTR incluant les numéros de téléphone des participants à la conférence,
l'accès aux autres téléphones au protocole IP (102, 103) en vue d'une conférence téléphonique par l'intermédiaire du réseau Internet sur la base des numéros de téléphone des participants à la conférence inclus dans l'enregistrement reçu des ressources NAPTR, et
l'exécution d'un mixage (303) de données de communication avec au moins deux autres téléphones au protocole IP (102, 103), les, au moins deux, autres téléphones au protocole IP (102, 103) étant inclus dans la conférence téléphonique.

9. Procédé de conférence téléphonique selon la revendication 8, dans lequel :
l'enregistrement des ressources NAPTR inclut une pluralité d'identificateurs URI, le numéro de téléphone de chacun des, au moins deux, autres téléphones au protocole IP (102, 103) étant fixé dans chacun de la pluralité des identificateurs URI, et
ladite étape d'accès comprend l'accès à l'un des, au moins deux, autres téléphones au protocole IP (102, 103) en vue de la conférence téléphonique par l'intermédiaire du réseau Internet, sur la base du numéro de téléphone de l'un des, au moins deux, autres téléphones au protocole IP (102, 103) inclus dans l'un de la pluralité des identificateurs URI.
